# FASCICULE DE BREVET EUROPEEN

(11) **EP 2 364 125 B1**
(45) Date de publication et mention de la délivrance du brevet: **08.06.2016**
(21) Numéro de dépôt: 09755939.7
(22) Date de dépôt: 30.10.2009
(51) Int. Cl.: A61C 13/107, A61C 13/277

(54) **DISPOSITIF DENTAIRE POUR COMBLER TEMPORAIREMENT L'EDENTEMENT CONSECUTIF A L'EXTRACTION D'UNE DENT**
DENTALE VORRICHTUNG ZUM VORÜBERGEHENDEN ERSETZEN EINES FEHLENDEN ZAHNES NACH EINER EXTRAKTION UND VERFAHREN ZU DEREN VERWENDUNG
DENTAL DEVICE FOR TRANSITIONAL REPLACEMENT OF A LACKING TOOTH AFTER AN EXTRACTION AND METHOD OF ITS USE

(30) Priorité: 30.10.2008 FR 0806030
(43) Date de publication de la demande: 14.09.2011
(73) Titulaire: Dynadent, 68200 Mulhouse (FR)
(72) Inventeur: MAADI, Mahfoud, F-68200 Mulhouse (FR); MAADI, Abd-Al-Gadir, F-68200 Mulhouse (FR); MAADI, Karim, F-68200 Mulhouse (FR)
(74) Mandataire: Koelbel, Caroline
(86) Numéro de dépôt international: PCT/FR2009/001264
(87) Numéro de publication internationale: WO 2010/049612

(56) Documents cités:
- EP-A- 2 055 262
- US-A- 3 854 210
- US-A- 4 163 318

## Description

### Domaine technique :

La présente invention concerne un dispositif dentaire pour combler temporairement l'édentement consécutif à l'extraction d'une dent, ce dispositif étant agencé pour être mis en place dans un espace localisé entre deux dents adjacentes bordant ledit édentement et comportant un bloc central et deux bras opposés, extensibles entre une position rétractée et une position étendue, ces bras portant chacun à leur extrémité libre au moins un appui adapté pour s'appliquer respectivement sur une surface desdites dents adjacentes lorsque les bras sont en position étendue, et ledit bloc central contenant un mécanisme de réglage agencé pour amener lesdits bras opposés dans ladite position étendue.

### Technique antérieure :

Lors de l'extraction d'une dent, notamment suite à une extraction non programmée ou suite à un traumatisme, les interstices entre les dents voisines sont généralement comblés provisoirement au moyen d'une prothèse unitaire fixée par des crochets encombrants, gênants pour le patient et visibles ou d'un pontage, couramment appelé bridge qui présente l'inconvénient de nécessiter la réduction des dents piliers pour assurer la réalisation d'une pièce comportant trois dents. Le but de ces éléments provisoires est d'assurer une réhabilitation fonctionnelle, d'améliorer la présentation esthétique en comblant l'édentement créé par l'extraction et de favoriser le bon déroulement de la cicatrisation osseuse.

L'inconvénient majeur des bridges et des prothèses unitaires provisoires provient de ce que ces éléments ne peuvent pas être réalisés au cours d'une seule et même séance de travail qui se situe immédiatement à la suite de l'extraction. En effet, ils doivent être réalisés par des techniciens prothésistes dentaires travaillant sur base d'une empreinte prise par le dentiste. Ces différentes opérations nécessitent au minimum deux séances de travail pour le dentiste, entre le moment où il extrait la dent et prend l'empreinte et celui où il peut placer l'élément provisoire, élaboré entretemps par l'atelier du prothésiste, dans la bouche du patient. En admettant que l'élément a été correctement réalisé et qu'il ne nécessite pas ou peu d'ajustage, au moins deux séances d'intervention du dentiste sur le patient sont requises.

En outre, la prothèse partielle adjointe ou prothèse unitaire amovible présente d'autres inconvénients. Elle occupe un volume important en bouche, engendre une perte d'adaptation au fur et à mesure que la cicatrisation se réalise, présente une mobilité relativement importante et crée un préjudice esthétique du fait que les crochets sont visibles, ce qui est souvent perçu comme un handicap par le patient ou son entourage.

Les bridges provisoires unitaires requièrent la taille des dents adjacentes, voisines de l'édentement, ce qui est inacceptable lorsque ces dents sont saines. En effet, une telle taille a pour conséquence la mutilation volontaire de dents saines pour assurer la mise en place d'un accessoire provisoire. En outre cette solution est particulièrement coûteuse pour le patient.

La publication US 4,163,318 décrit un dispositif pour combler l'espace entre deux dents comportant deux bras extensibles déplacés par un pignon central engrenant deux crémaillères opposées, le pignon central étant mobile en rotation dans un support au moyen d'une vis de commande. Ce dispositif a l'inconvénient d'être invasif puisque les extrémités des bras extensibles s'insèrent dans des logements taillés dans les dents saines. Il est relativement onéreux étant donné qu'il nécessite une précision de l'ordre du micron. De plus, il ne comporte pas de moyens de blocage mécanique des bras en position étendue permettant d'éviter tout risque de desserrage ou de déréglage du dispositif. Ce dispositif n'est donc pas satisfaisant.

### Exposé de l'invention :

La présente invention apporte une solution aux problèmes évoqués ci-dessus en proposant un dispositif non invasif, permettant d'assurer une mise en place provisoire immédiate d'un bridge, après l'extraction d'une dent, de respecter les contraintes imposées pour que la cicatrisation de la plaie puisse se faire dans les meilleures conditions, d'offrir au patient une esthétique sans défaut et de réduire les coûts en limitant le nombre des intervenants et le nombre des interventions.

Dans ce but, le dispositif dentaire selon l'invention est caractérisé en ce que ledit mécanisme de réglage comporte un dispositif anti-retour comportant au moins une roue dentée coopérant avec des cliquets, en ce que ledit mécanisme de réglage comporte deux brides en forme de boucles respectivement associées aux deux appuis et agencées pour entourer respectivement lesdites dents adjacentes lorsque lesdits bras sont dans ladite position étendue, et en ce que ledit dispositif dentaire comporte des moyens de verrouillage desdites brides lorsque lesdits bras sont dans la position étendue.

Lesdites brides sont de préférence souples et peuvent être réalisées en fibre de verre.

Ainsi, ce dispositif dentaire est non invasif et peut être adapté in situ à tout type de dents grâce à ses deux brides réglables qui entourent les dents adjacentes à l'édentement et permettent de fixer rigidement le dispositif entre ces dents en resserrant ces brides par les moyens de réglage et de blocage pour provoquer l'écartement des bras et plaquer les appuis contre ces dents. Ce dispositif permet une mise en place immédiate d'un bridge sur le patient sans travail préparatoire en laboratoire nécessitant une prise d'empreinte.

Dans une forme de réalisation préférée, chacune desdites brides comporte avantageusement une extrémité solidaire d'un des bras extensibles et l'autre extrémité solidaire d'un axe rotatif dudit mécanisme de réglage, cet axe rotatif portant des moyens d'actionnement et ladite roue dentée dudit dispositif anti-retour.

De préférence, le bloc central comporte un boîtier portant les cliquets et agencé pour recevoir ledit axe rotatif. Il est de préférence au moins partiellement évidé et agencé pour recevoir une résine composite photo ou chemo polymérisable afin de verrouiller le mécanisme de réglage en position lorsque les bras sont en position étendue.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 représente une vue en perspective d'une forme de réalisation du dispositif dentaire selon l'invention,
- la figure 2 représente une vue en perspective éclatée du dispositif dentaire de la figure 1,
- la figure 3A est une vue partielle de dessus du dispositif dentaire des figures 1 et 2, dans sa position étendue,
- la figure 3B est une vue en coupe selon le plan de coupe BB du dispositif dentaire de la figure 3A,
- la figure 4A est une vue de dessus du dispositif dentaire des figures 1 et 2, dans sa position rétractée,
- la figure 4B est une vue de côté du dispositif dentaire de la figure 4A,
- la figure 5 représente le dispositif dentaire des figures 1 et 2 au début de sa mise en place dans un édentement localisé entre deux dents d'un patient,
- la figure 6 représente le dispositif dentaire des figures 1 et 2 à la fin de sa mise en place dans un édentement localisé entre deux dents d'un patient.

### Illustrations de l'invention:

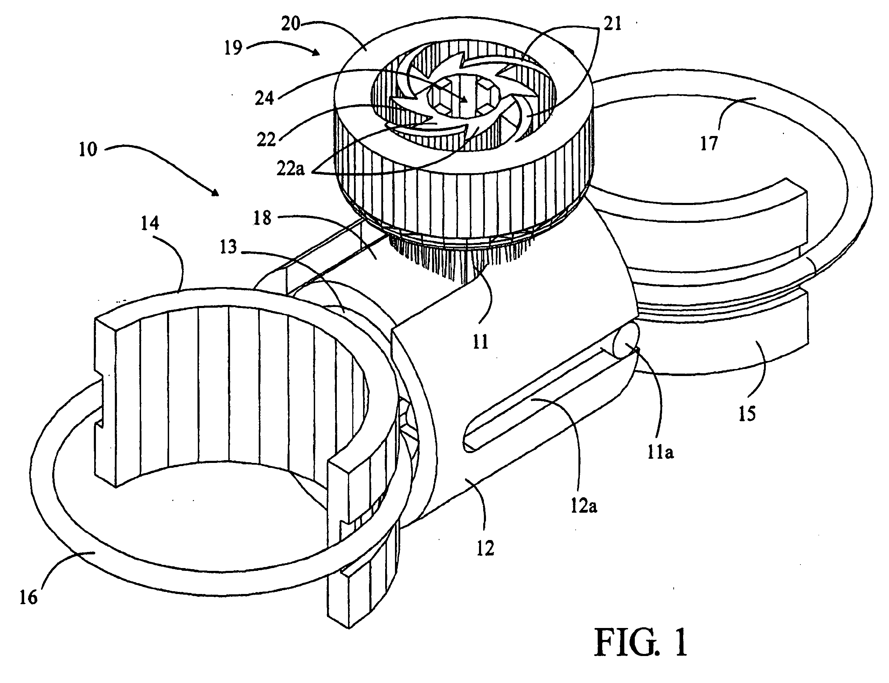

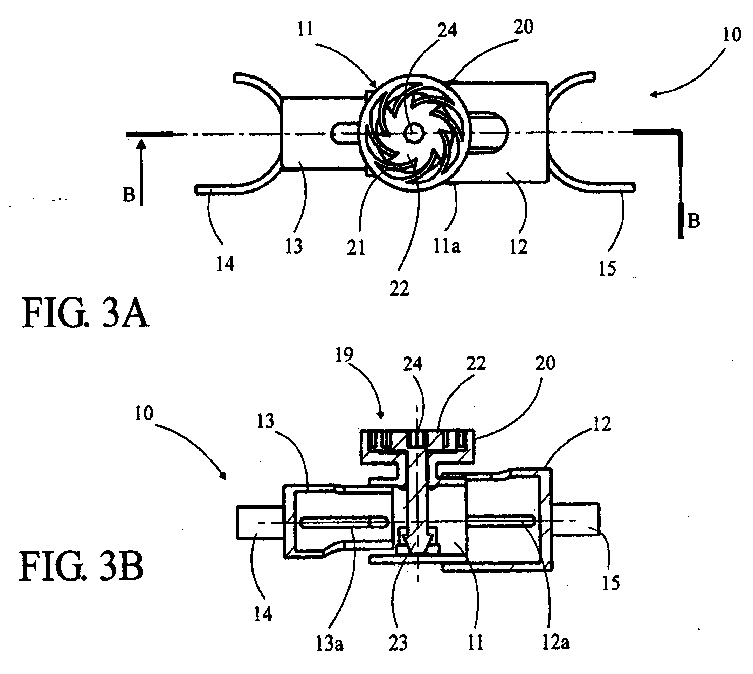

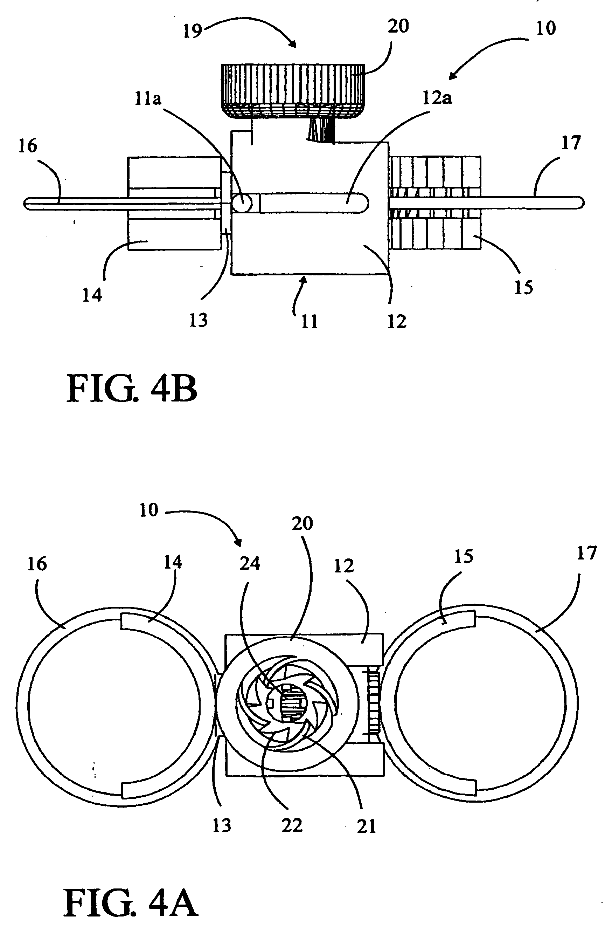

En référence aux figures 1 à 6, le dispositif dentaire 10 comporte un bloc central 11 portant deux bras 12 et 13 opposés et extensibles ayant respectivement, à leur extrémité libre, des appuis 14 et 15 dont la forme est approximativement celle de segments cylindriques. On notera que chaque appui 14 et 15 peut être réalisé en un seul élément ou en deux ou plusieurs éléments liés aux bras respectifs 13 et 12. Deux brides 16 et 17 en forme de boucles sont respectivement associées aux deux appuis 14 et 15, ces brides étant destinées à entourer les dents adjacentes d'un édentement. Le bloc central 11 comporte un élément tubulaire 18 agencé pour porter les deux bras 12 et 13 et pour permettre leur coulissement axial en vue de leur extension à partir d'une position initiale rétractée. En l'occurrence, le bras 13 a une section extérieure sensiblement égale à la section intérieure de l'élément tubulaire 18 et coulisse à l'intérieur de ce dernier et le bras 12 a une section intérieure sensiblement égale à la section extérieure de l'élément tubulaire 18 et coulisse à l'extérieur de ce dernier. Le déplacement du bras 12 est guidé par deux ergots protubérants 11a opposés, solidaires du bloc central 11 et engagés dans deux entailles latérales 12a du bras 12. Les ergots 11a sont protubérants par rapport à la surface extérieure du bloc central 11. Le déplacement du bras 13 est guidé par deux ergots protubérants (non représentés) solidaires du bloc central 11 et qui sont engagés dans deux entailles latérales 13a du bras 13. Ces ergots sont protubérants par rapport à la surface intérieure du bloc central 11.

Par ailleurs, le bloc central 11 porte un mécanisme de réglage 19 qui se compose d'une pièce annulaire 20 évidée à l'intérieur de laquelle sont fixées un certain nombre de lames élastiques 21 en arcs de cercles qui ont une fonction de cliquets coopérant avec une roue dentée centrale 22 solidaire d'un axe 23 qui se prolonge à l'intérieur de l'élément tubulaire 18 et qui peut tourner dans un seul sens de rotation grâce à des moyens d'actionnement, qui sont dans l'exemple représenté constitués par une ouverture centrale 24 apte à recevoir une clé à six pans ou une molette amovible (non représentées). La combinaison des pattes élastiques 21, sous forme de lames attachées à la paroi intérieure de la pièce annulaire 20 et de la roue dentée centrale 22 constitue un dispositif anti-retour du type à cliquets, dont le but sera décrit ci-dessous.

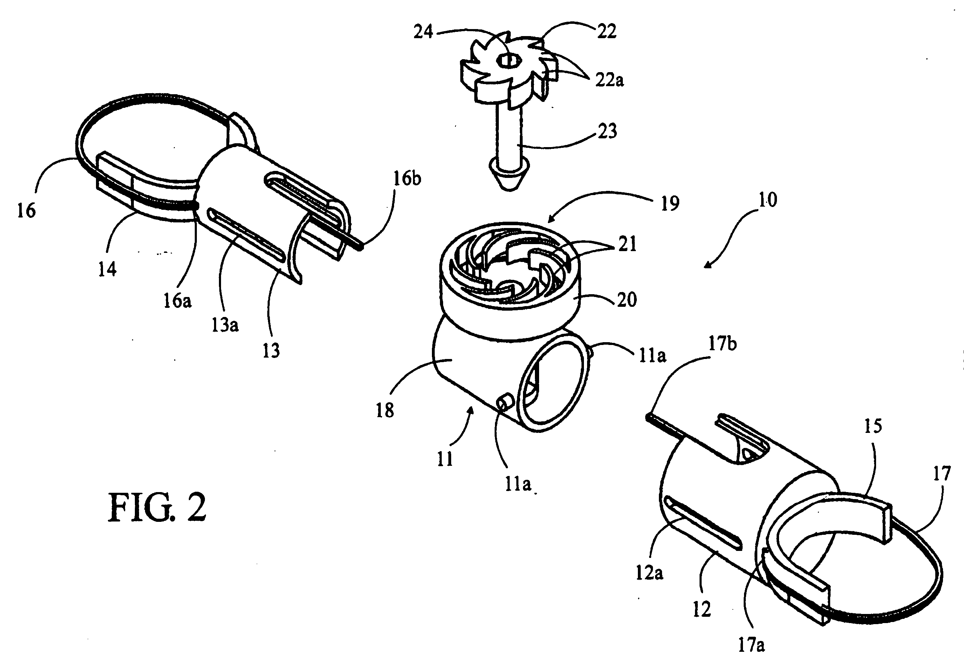

Les brides 16, 17 sont souples et par exemple réalisées en fibre de verre, ou similaire, pour pouvoir s'adapter aisément à tout profil de dents. La bride 16 a une extrémité fixe 16a solidaire du bras correspondant 13 et une extrémité fixe 16b qui est agencée pour être enroulée autour de l'axe 23. De façon similaire, la bride 17 comporte une extrémité fixe 17a solidaire du bras correspondant 12 et une extrémité fixe 17b qui est agencée pour être enroulée autour de l'axe 23 (cf. fig. 2). De cette manière, lorsque l'utilisateur tourne la roue dentée centrale 22, par exemple au moyen d'une clé à six pans (non représentée) engagée dans l'ouverture centrale 24 de cette roue dentée centrale 22, il exerce une traction sur les extrémités 16b et 17b des brides 16 et 17. Comme les extrémités 16a et 17a de ces brides sont attachées respectivement aux bras 13 et 12 et que les brides 16 et 17 sont des boucles disposées autour des dents adjacentes, cette traction a pour effet de déplacer les bras extensibles 12 et 13 en direction desdites dents adjacentes jusqu'à ce que les appuis 14 et 15 soient plaqués contre les surfaces respectives de ces dents. Le dispositif anti-retour est constitué des pattes élastiques 21 qui coopèrent avec les dents 22a de la roue dentée centrale 22 et assurent le blocage en position de l'axe 23 et par conséquent des brides 16 et 17. De cette manière, le praticien est en mesure de fixer fermement le dispositif dentaire 10 dans l'espace correspondant à l'édentement, cette opération pouvant être réalisée immédiatement après l'extraction par le praticien lui-même sans l'intervention d'une tierce personne, comme le technicien prothésiste dentaire. Dans la pratique, le dentiste tourne la roue dentée 22 au moyen de la clé (non représentée) ou au moyen d'une molette d'actionnement, de préférence amovible, agissant comme une clé introduite dans l'ouverture centrale 24, jusqu'à ce que le blocage du dispositif soit suffisant.

Pour sécuriser le dispositif en position, il le bloque au moyen d'une résine composite photo ou chemo polymérisable par exemple par rayonnement UV, qui est coulée à l'état liquide dans le bloc central 11 et plus particulièrement dans la pièce annulaire 20 formant un boîtier, et qui a pour effet de solidariser les pattes élastiques 21 et la roue dentée 22.

Le dispositif dentaire 10 ainsi mis en place sert de support à une prothèse, du type bridge que le dentiste pourra réaliser en plaçant une dent évidée en résine ou en tout autre matériau adéquat sur ce dispositif et en la cimentant pour la solidariser. Le dispositif dentaire 10 est lié aux dents adjacentes saines qui ne nécessitent aucune mutilation préalable. La mise en place du bridge provisoire peut être effectuée immédiatement par le dentiste suite à une extraction. L'intervention du prothésiste est supprimée. L'aspect esthétique du patient est préservé. En résumé, ce dispositif et le procédé de mise en place permettent de gagner du temps, d'effectuer des économies, d'améliorer le traitement et de préserver l'aspect esthétique du patient.

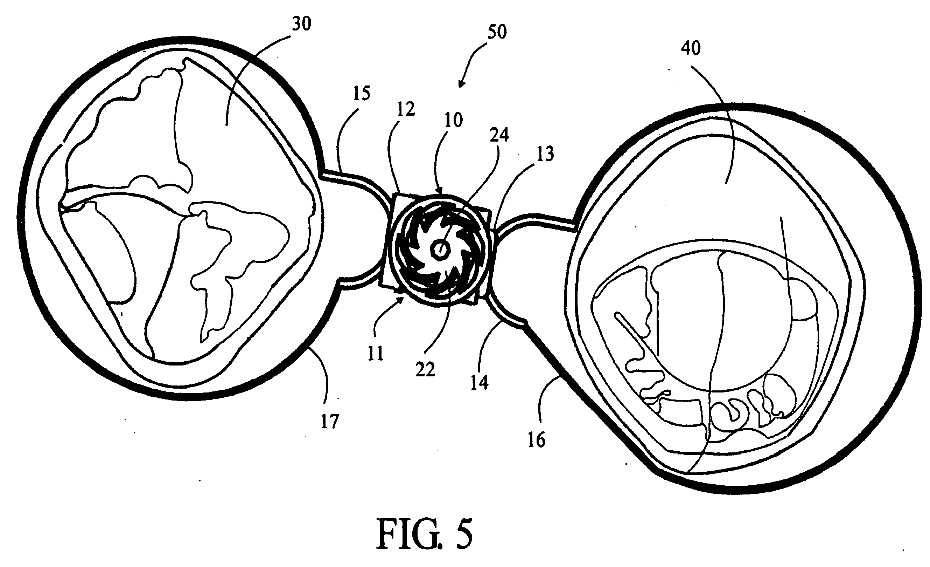

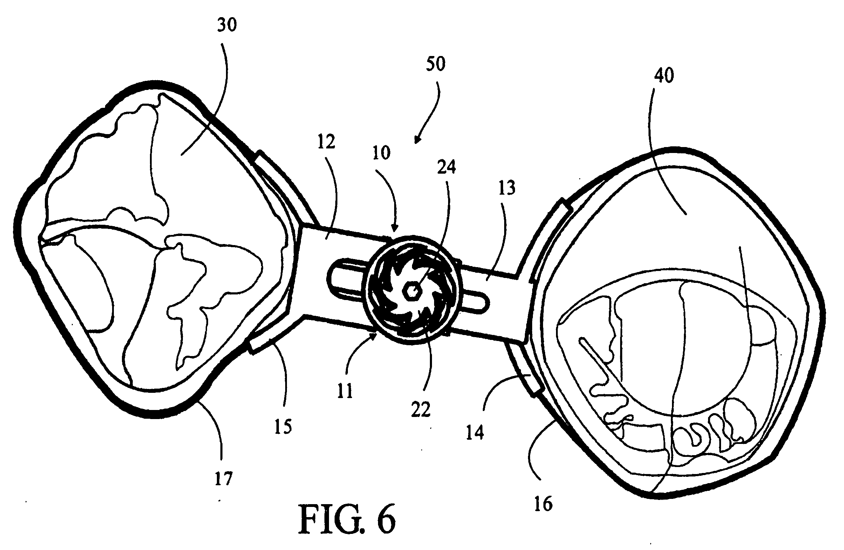

Cette mise en place est représentée par les figures 5 et 6. Sur la figure 5, deux dents adjacentes 30 et 40 qui bordent l'édentement 50 dû à une extraction sont entourées des brides 16 et 17. Ces brides 16 et 17 sont largement plus grandes que la circonférence des deux dents 30 et 40. Après ce positionnement provisoire, l'opérateur, en général le dentiste, utilise une clé pour tourner la roue dentée centrale 22 du dispositif 10. Cette rotation a pour effet de tendre les brides 16 et 17 et de tirer les deux bras 12 et 13 jusqu'à ce que les appuis 14 et 15 viennent en contact avec les surfaces adjacentes des dents adjacentes 30 et 40, comme le montre la figure 6. Lorsque le serrage est considéré comme suffisant par le praticien, il retire la clé et bloque le dispositif dentaire 10 en position avec de la résine coulée dans la pièce annulaire 20 en forme de boîtier, cette résine étant polymérisée par un rayonnement UV par exemple. Le dispositif dentaire 10 est prêt à recevoir une dent provisoire.

Il est bien entendu que diverses variantes de réalisation peuvent être imaginées. L'une des opérations majeures consiste à déplacer les bras 12 et 13 latéralement pour les amener de la position rétractée vers la position étendue et à ajuster les brides 16 et 17 autour des dents adjacentes 30 et 40 permettant une adaptation in situ à toutes les formes de dents, sans entailler les dents saines.

## Revendications

1. Dispositif dentaire (10) pour permettre de combler temporairement l'édentement (50) consécutif à l'extraction d'une dent, ce dispositif étant agencé pour être mis en place dans un espace localisé entre deux dents adjacentes (30, 40) bordant ledit édentement, et comportant un bloc central (11) portant deux bras (12, 13) opposés, extensibles entre une position rétractée et une position étendue, ces bras portant chacun à leur extrémité libre au moins un appui (14, 15) adapté pour s'appliquer respectivement sur une surface desdites dents adjacentes lorsque les bras sont en position étendue, et ledit bloc central contenant un mécanisme de réglage (19) agencé pour amener lesdits bras opposés dans ladite position étendue, **caractérisé en ce que** ledit mécanisme de réglage (19) comporte un dispositif anti-retour (20, 21, 22) comportant au moins une roue dentée (22) coopérant avec des cliquets (20, 21) et **en ce que** ledit mécanisme de réglage (19) comporte deux brides (16, 17) en forme de boucles respectivement associées aux deux appuis et agencées pour entourer respectivement lesdites dents adjacentes (30, 40) lorsque lesdits bras (12, 13) sont dans ladite position étendue, et **en ce que** ledit dispositif dentaire (10) comporte des moyens de verrouillage (21, 22) desdites brides (16, 17) lorsque lesdits bras sont dans la position étendue.

2. Dispositif dentaire selon la revendication 1, **caractérisé en ce que** chacune desdites brides (16, 17) comporte une extrémité (16a, 17a) solidaire d'un des bras (12, 13) extensibles et l'autre extrémité (16b, 17b) solidaire d'un axe rotatif (23) faisant partie dudit mécanisme de réglage.

3. Dispositif dentaire selon la revendication 2, **caractérisé en ce que** ledit axe rotatif (23) du mécanisme de réglage porte des moyens d'actionnement (24) et ladite roue dentée (22) du dispositif anti-retour.

4. Dispositif dentaire selon la revendication 3, **caractérisé en ce que** ledit bloc central (11) comporte un boîtier (20) portant lesdits cliquets (21) et agencé pour recevoir ledit axe rotatif (23).

5. Dispositif dentaire selon la revendication 4, **caractérisé en ce que** ledit boîtier (20) est au moins partiellement évidé et agencé pour recevoir une résine composite photo ou chemo polymérisable agencé pour verrouiller ledit mécanisme de réglage (19) en position lorsque les bras (12, 13) sont en position étendue.

6. Dispositif dentaire selon l'une quelconque des revendications précédentes, **caractérisé en ce que** lesdites brides (16, 17) sont souples et réalisées en fibre de verre.

## Patentansprüche

1. Dentale Vorrichtung (10) zum vorübergehenden Ersetzen eines fehlenden Zahns (50) nach einer Extraktion, wobei diese Vorrichtung ausgelegt ist, um in einem Leerraum zwischen zwei beidseitig von fehlendem Zahn anliegenden Zähnen (30, 40) eingesetzt zu werden, und einen zentralen Block (11) mit zwei entgegen gesetzte Armen (12, 13) beträgt, die zwischen einer eingefahrenen Stellung und einer ausgefahrenen Stellung ausstreckbar sind, wobei diese Arme an ihrem freien Ende jeweils zumindest eine Auflage (14, 15) tragen, die ausgelegt ist, um jeweils auf einer Fläche von besagten anliegenden Zähnen aufzuliegen wenn die Arme sich in ausgefahrener Stellung befinden, und wobei besagter zentraler Block einen Verstellmechanismus (19) beträgt, der ausgelegt ist, um besagte entgegen gesetzte Arme in besagte ausgefahrene Stellung zu bringen, **dadurch gekennzeichnet, dass** besagter Verstellmechanismus (19) mit einer Rücklaufsperre (20, 21, 22) ausgestattet ist, die zumindest ein mit Sperrklinken (20, 21) zusammenarbeitendes Zahnrad (22) beträgt, und dadurch, dass besagter Verstellmechanismus (19) zwei jeweils mit einer den beiden Auflagen verbundene Schlingen (16, 17) in Form von Schleifen beträgt, die ausgelegt sind, um jeweils besagte anliegende Zähne (30, 40) zu urmingen wenn besagte Arme (12, 13) sich in besagter ausgefahrener Stellung befinden, und dadurch, dass besagte dentale Vorrichtung (10) Mittel (21, 22) zur Verriegelung von besagten Schlingen (16, 17) beträgt wenn besagte Arme sich in besagter ausgefahrener Stellung befinden.

2. Dentale Vorrichtung nach Anspruch 1, **dadurch gekennzeichnet, dass** jede der besagten Schlingen (16, 17) ein an einem der ausstreckbaren Arme (12, 13) befestigtes Ende (16a, 17a) beträgt und das andere Ende (16b, 17b) an einer besagtem Verstellmechanismus angehörenden Drehachse (23) befestigt ist.

3. Dentale Vorrichtung nach Anspruch 2, **dadurch gekennzeichnet, dass** besagte Drehachse (23) des Verstellmechanismus Betätigungsmittel (24) und besagtes Zahnrad (22) der Rücklaufsperre trägt.

4. Dentale Vorrichtung nach Anspruch 3, **dadurch gekennzeichnet, dass** besagter zentraler Block (11) ein Gehäuse (20) beträgt, das besagte Sperrklinken (21) trägt und ausgelegt ist, um besagte Drehachse (23) aufzunehmen.

5. Dentale Vorrichtung nach Anspruch 4, **dadurch gekennzeichnet, dass** besagtes Gehäuse (20) zumindest zum Teil ausgehöhlt ist und ausgelegt ist, um einen foto- oder chemisch polymerisierbar Reaktionsharz aufzunehmen, der ausgelegt ist, um besagten Verstellmechanismus (19) in Stellung zu verriegeln wenn sich die Arme (12, 13) in ausgefahrener Stellung befinden.

6. Dentale Vorrichtung nach einem beliebigen der vorherigen Ansprüche, **dadurch gekennzeichnet, dass** besagte Schlingen (16, 17) flexibel sind und aus Fiberglas hergestellt sind.

## Claims

1. Dental device (10) for allowing to fill temporarily the toothless gap (50) following the extraction of a tooth, this device being arranged so as to be put in place in a space located between two adjacent teeth (30, 40) bordering said toothless gap and comprising a central block (11) carrying two arms (12, 13) opposite to each other, extensible between a retracted position and an extended position, each of these arms carrying at their free end at least one support (14, 15) adapted for resting respectively on a surface of said adjacent teeth when the arms are in extended position, and said central block including an adjusting mechanism (19) arranged for bringing said opposite arms in said extended position, **characterised in that** said adjusting mechanism (19) comprises a reverse-lock device (20, 21, 22) comprising at least one toothed wheel (22) cooperating with pawls (20, 21) and **in that** said adjusting mechanism (19) comprises two loop-shaped straps (16, 17) respectively associated with the two supports and arranged to surround respectively said adjacent teeth (30, 40) when said arms (12, 13) are in said extended position, and **in that** said dental device (10) comprises locking means (21, 22) for said straps (16, 17) when said arms are in the extended position.

2. Dental device according to claim 1, **characterised in that** each of said straps (16, 17) comprises an end (16a, 17a) that is attached to one of the extensible arms (12, 13) and the other end (16b, 17b) attached to a rotary shaft (23) belonging to said adjusting mechanism.

3. Dental device according to claim 2, **characterised in that** said rotary shaft (23) of the adjusting mechanism carries driving means (24) and said toothed wheel (22) of the reverse-lock device.

4. Dental device according to claim 3, **characterised in that** said central block (11) comprises a housing (20) containing said pawls (21) and arranged to receive said rotary shaft (23).

5. Dental device according to claim 4, **characterised in that** said housing (20) is at least partly hollowed and arranged to receive a photo or chemo-polymerisable composite resin in order to lock said adjusting mechanism (19) in position when the arms (12, 13) are in the extended position

6. Dental device according to any of the previous claims, **characterised in that** said straps (16, 17) are flexible and made of glass fibre.
